# FASCICULE DE BREVET EUROPEEN

(11) **EP 2 694 372 B1**
(45) Date de publication et mention de la délivrance du brevet: **20.07.2016**
(21) Numéro de dépôt: 12711418.9
(22) Date de dépôt: 02.04.2012
(51) Int. Cl.: H04N 5/232, H04N 7/18, B64D 45/00, B64D 47/08

(54) **AERONEF POURVU D'UN SYSTEME DE SURVEILLANCE**
FLUGZEUG MIT EINEM ÜBERWACHUNGSSYSTEM
AIRCRAFT PROVIDED WITH A SURVEILLANCE SYSTEM

(30) Priorité: 01.04.2011 FR 1152832
(43) Date de publication de la demande: 12.02.2014
(73) Titulaire: Latecoere, 31500 Toulouse (FR)
(72) Inventeur: BOUCOURT, Gérard, 31180 Rouffiac Tolosan (FR); CARRIER, Xavier, 31180 Rouffiac (FR); GROUX, Laurent, 31280 Mons (FR)
(74) Mandataire: Ipside
(86) Numéro de dépôt international: PCT/EP2012/055988
(87) Numéro de publication internationale: WO 2012/131101

(56) Documents cités:
- EP-A1- 1 419 964
- WO-A1-01/99429
- FR-A1- 2 856 226
- FR-A1- 2 904 506
- US-A1- 2005 258 943
- US-B1- 6 831 680

## Description

### DOMAINE TECHNIQUE

La présente invention concerne un aéronef pourvu d'un système de surveillance d'une pluralité de zones d'intérêt à l'intérieur d'une enceinte de l'aéronef.

L'invention trouve une application particulièrement avantageuse dans le cas d'un aéronef de type avion, mais est applicable à tout type d'aéronef. L'invention s'avère tout à fait avantageuse, notamment, pour une application à la surveillance de portes d'accès d'une enceinte d'avion, y compris des portes situées à proximité de la cabine de pilotage de l'avion, comme par exemple une porte séparant la cabine de pilotage du reste de l'avion.

### ÉTAT DE LA TECHNIQUE

Suite aux attentats du 11 septembre 2001, la réglementation aéronautique a en effet modifié ses textes afin de renforcer la sécurité sur les avions, et particulièrement ceux destinés à transporter des passagers. Une des exigences de cette réglementation est la mise en place d'un système de surveillance permettant à l'équipe de pilotage de surveiller notamment les personnes souhaitant pénétrer dans la cabine de pilotage, avant de leur en autoriser l'accès.

Un tel système de surveillance doit par conséquent permettre d'observer une zone d'intérêt associée à une porte d'accès à la cabine de pilotage, séparant ladite cabine de pilotage d'un habitacle de l'avion, généralement lui-même destiné à accueillir des passagers.

Dans les systèmes de surveillance proposés par l'art antérieur à cet effet, une première caméra est disposée de sorte que la zone d'intérêt associée à la porte d'accès à la cabine de pilotage se trouve dans le champ de vision de ladite caméra.

La zone d'intérêt associée à la porte d'accès à la cabine de pilotage correspond à une zone située devant ladite porte d'accès, à l'extérieur de la cabine de pilotage. La première caméra est par exemple située juste au-dessus de la porte d'accès à la cabine de pilotage, ou en face de ladite porte d'accès et dirigée vers elle.

En outre, il est utile qu'une seconde porte d'accès, permettant de pénétrer depuis l'extérieur de l'avion dans son habitacle, soit également surveillée afin de fournir une information visuelle aux membres de l'équipe de pilotage sur la circulation des passagers ou du matériel. Les systèmes de surveillance classiquement mis en oeuvre comportent à cet effet une seconde caméra disposée de sorte qu'une zone d'intérêt associée à ladite seconde porte d'accès se trouve dans son champ de vision.

En pratique, un avion civil classique comprend :
- une porte d'accès latérale séparant l'intérieur de l'habitacle de l'extérieur de l'avion, ladite porte d'accès latérale donnant sur une allée transversale de l'habitacle,
- une porte d'accès à la cabine de pilotage, donnant sur une allée longitudinale de l'habitacle, qui se croise avec l'allée transversale en une zone de croisement.

La zone d'intérêt associée à la porte d'accès latérale de l'avion correspond à une zone située devant ladite porte d'accès latérale, à l'intérieur de l'habitacle. La seconde caméra est par exemple située juste au dessus de cette porte d'accès latérale, ou en face d'elle et au niveau d'une extrémité de l'allée transversale qui lui est opposée.

En outre, les systèmes de surveillance classiques comportent le plus souvent une troisième caméra située à l'extrémité opposée de l'allée transversale par rapport à la seconde caméra. Cette troisième caméra est dirigée vers l'allée transversale, et elle est mise en oeuvre pour observer des portions de l'allée transversale non observables par les autres caméras et/ou pour observer une porte d'accès latérale supplémentaire donnant également sur l'allée transversale, par exemple une issue de secours de l'avion.

De tels systèmes de surveillance permettent de fournir une visibilité généralement satisfaisante de la partie de l'habitacle à proximité de la cabine de pilotage. Toutefois, de tels systèmes de surveillance sont complexes à installer dans un avion, et ils nécessitent de nombreux câblages pour relier toutes les caméras du système de surveillance, et de nombreuses opérations de maintenance sur les différents éléments dudit système de surveillance.

US 2005/0258943 A1 divulgue les caractéristiques du préambule de la revendication 1.

### EXPOSÉ DE L'INVENTION

L'invention vise à proposer un système de surveillance permettant d'avoir une visibilité améliorée de l'intérieur d'un aéronef. L'invention vise également à proposer un système de surveillance qui présente l'avantage, suivant certains modes de réalisation, d'être plus simple à installer que les systèmes de surveillance de l'art antérieur, tout en permettant d'observer de nombreuses zones d'intérêt.

A cet effet, il est proposé par la présente invention un aéronef comportant une enceinte et un système de surveillance de zones d'intérêt à l'intérieur de l'enceinte. Telle qu'elle est définie dans la présente invention, une enceinte peut être une cabine de pilotage de l'aéronef, un habitacle passagers, une soute, un logement d'un train d'atterrissage, etc. En outre, une zone d'intérêt peut être associée à une porte d'accès de l'enceinte, auquel cas il s'agit de ladite porte d'accès et/ou d'une zone au voisinage immédiat de cette porte. Une zone d'intérêt peut également correspondre à une allée de l'aéronef, à un « galey » (zone de préparation et de stockage des préparations alimentaires du personnel navigant commercial), etc.

En outre, le système de surveillance comporte une caméra présentant un champ de vision panoramique, dite « caméra panoramique ». Dans toute la présente description, on entend par caméra panoramique, une caméra présentant un champ de vision d'une largeur angulaire supérieure à 150 degrés. Dans des modes préférés de réalisation, la caméra panoramique présente avantageusement un très large champ de vision, de largeur angulaire supérieure à 240 degrés.

La caméra panoramique est positionnée de sorte qu'au moins une zone d'intérêt se trouve dans son champ de vision. Ainsi, du fait qu'elle est panoramique, la caméra panoramique permettra d'avoir une vision large de cette zone d'intérêt. En outre, la caméra panoramique peut également être positionnée de sorte qu'au moins deux zones d'intérêt différentes de l'enceinte se trouvent dans son champ de vision. Le système de surveillance permet ainsi de surveiller plusieurs zones d'intérêt avec une seule caméra.

Selon un mode de réalisation particulièrement préféré de l'invention, l'enceinte comporte au moins deux portes d'accès distantes, c'est-à-dire non adjacentes, et la caméra panoramique est positionnée de sorte qu'au moins deux zones d'intérêt associées à des portes d'accès différentes se trouvent dans son champ de vision.

Le large champ de vision de la caméra permet avantageusement au système de surveillance de ne présenter quasiment plus d'angles morts, c'est-à-dire d'être apte à observer, pour chaque porte d'accès concernée, une zone d'intérêt très large, réduisant ainsi fortement le volume des zones dans lesquelles un individu pourrait se dissimuler, à proximité de la porte, sans être visible par la caméra panoramique conforme à l'invention.

De préférence, l'enceinte est l'habitacle passagers de l'aéronef, une première porte d'accès, dite latérale, est une porte d'accès de l'extérieur de l'aéronef à l'habitacle passagers, et une deuxième porte d'accès est une porte d'accès de l'habitacle à la cabine de pilotage. La caméra est disposée dans l'habitacle passagers, de préférence à proximité de la cabine de pilotage.

Selon un mode de réalisation préféré de l'invention, l'aéronef comporte dans l'habitacle passagers une allée transversale, jouxtant la cabine de pilotage, et une allée longitudinale se croisant en une zone de croisement. Une première porte d'accès est située à une extrémité de l'allée transversale et une deuxième porte d'accès, permettant d'accéder à la cabine de pilotage, est située à une extrémité de l'allée longitudinale. La caméra panoramique est positionnée au niveau de la zone de croisement de sorte qu'une zone d'intérêt associée à la première porte d'accès et une zone d'intérêt associée à la deuxième porte d'accès se trouvent dans son champ de vision. Cette implantation topologique de la caméra panoramique permet au système de surveillance de couvrir les zones d'intérêt associées aux deux portes d'accès, et en particulier une zone d'intérêt associée à la seconde porte d'accès permettant d'accéder à la cabine de pilotage. Cette implantation topologique de la caméra panoramique est donc avantageuse pour réaliser un système de surveillance de la porte de la cabine de pilotage (« Cockpit Door Surveillance System » ou CDSS).

Selon un mode de réalisation préféré de l'invention, le système de surveillance comporte en outre une caméra présentant un champ de vision non panoramique (c'est-à-dire de largeur angulaire égale ou inférieure à 150 degrés), dite « caméra non panoramique », distante de la caméra panoramique et positionnée de sorte à observer une zone d'intérêt se trouvant dans le champ de vision de la caméra panoramique.

La caméra non panoramique permet d'observer une zone d'intérêt se trouvant dans le champ de vision de la caméra panoramique avec un point de vue différent de celui de ladite caméra panoramique, et éventuellement avec une meilleure résolution qu'avec ladite caméra panoramique. Ainsi la caméra panoramique et la caméra non panoramique se complètent parfaitement. En effet, la caméra panoramique permet d'avoir une vision globale d'une scène, tandis que la caméra non panoramique permet d'avoir une vision plus détaillée d'une zone prédéfinie à l'intérieur de cette scène.

Par exemple, dans le cas d'une caméra panoramique se trouvant au niveau de la zone de croisement entre l'allée transversale jouxtant la cabine de pilotage et l'allée longitudinale, la caméra non panoramique peut être positionnée de sorte à observer une zone d'intérêt se trouvant à l'extrémité de l'allée longitudinale, devant la seconde porte d'accès permettant d'accéder à ladite cabine de pilotage. Dans un tel cas, la caméra panoramique, par exemple logée dans le plafond et dirigée vers un plancher de la zone de croisement, permet d'effectuer un contrôle global de l'accès à la cabine de pilotage et de détecter la présence d'une personne cherchant à accéder à la cabine de pilotage. La caméra non panoramique peut alors être mise en oeuvre pour l'identification de la personne cherchant à accéder à la cabine de pilotage. La caméra non panoramique est par exemple positionnée dans la seconde porte d'accès ou dans une cloison entourant ladite seconde porte d'accès.

Dans des modes de réalisation préférés de l'invention, la caméra panoramique présente un champ de vision suffisamment large pour observer également l'allée transversale du côté opposé à la première porte d'accès par rapport à ladite caméra panoramique, et/ou l'allée longitudinale du côté opposé à la deuxième porte d'accès par rapport à ladite caméra panoramique. Le système présente ainsi l'avantage de pouvoir contrôler l'allée transversale et/ou l'allée longitudinale sans nécessiter une nouvelle caméra.

Dans des modes de réalisation préférés de l'invention, l'aéronef comporte une troisième porte d'accès à une autre extrémité de l'allée transversale, et la caméra panoramique présente un champ de vision suffisamment large pour observer également ladite troisième porte d'accès. En effet, un aéronef comporte classiquement une issue de secours disposée à une extrémité de l'allée transversale opposée à la porte d'accès de l'extérieur à l'habitacle passagers. Le système présente ainsi l'avantage de pouvoir contrôler cette troisième porte d'accès sans nécessiter une nouvelle caméra.

Dans des modes de réalisation préférés de l'invention, l'aéronef comporte une seconde allée longitudinale se croisant avec l'allée transversale en une seconde zone de croisement, et le système de surveillance comporte une autre caméra panoramique positionnée au niveau de la seconde zone de croisement de sorte à observer la seconde allée longitudinale. Une telle seconde caméra panoramique permet avantageusement d'obtenir une redondance des contrôles de l'allée transversale et des deux portes d'accès depuis l'extérieur à l'habitacle de l'aéronef. Cette redondance des informations présente l'avantage de permettre de visualiser les personnes voulant accéder à la cabine de pilotage sous plusieurs angles de vue, et ainsi de mieux les identifier.

Dans des modes de réalisation préférés de l'invention, pouvant être considérés seuls ou en combinaison avec les modes de réalisation précédents, le système de surveillance comporte une caméra panoramique située dans une soute de l'aéronef. Une telle caméra panoramique disposée dans la soute de l'aéronef permet de contrôler les déplacements de bagages ou bien de détecter la présence d'intrus ou la survenue d'incidents dans la soute.

Dans des modes de réalisation préférés de l'invention, pouvant être considérés seuls ou en combinaison avec les modes de réalisation précédents, le système de surveillance comporte une caméra panoramique positionnée dans un logement d'un train d'atterrissage de l'aéronef. Une telle caméra panoramique permet de contrôler le fonctionnement du train d'atterrissage ou de détecter la présence d'intrus dans le logement dudit train d'atterrissage.

Dans des modes de réalisation préférés de l'invention, pouvant être considérés seuls ou en combinaison avec les modes de réalisation précédents, le système de surveillance comporte une caméra panoramique positionnée dans une cabine passagers de l'aéronef, c'est-à-dire la zone de l'habitacle passagers dans laquelle se trouvent les sièges pour les passagers.

De préférence, au moins une caméra panoramique est logée dans un plafond de l'enceinte dans laquelle est située ladite caméra. Une caméra située au plafond présente notamment l'avantage d'être disposée dans un endroit peu encombré de l'aéronef, quelle que soit l'enceinte considérée de l'aéronef. En cela, la présente invention s'avère bien plus avantageuse que les dispositifs proposés par l'art antérieur, qui requièrent une installation dans des endroits plus encombrés tels que les cloisons situées au dessus des portes d'accès.

Dans des modes préférés de réalisation, au moins une caméra panoramique comporte une caméra fixe associée à un objectif fixe apte à focaliser simultanément la totalité du champ de vision panoramique sur la caméra fixe. De telles dispositions permettent d'acquérir simultanément la totalité du champ de vision panoramique de cette caméra panoramique, et chaque image acquise représente la totalité du champ de vision panoramique.

Dans des modes particuliers de réalisation, au moins une caméra panoramique présente un champ de vision qui est panoramique à la fois en azimut, autour d'un axe de la caméra panoramique, et en élévation dans un plan contenant ledit axe de la caméra panoramique. En d'autres termes, la largeur angulaire dudit champ de vision est supérieure à 150 degrés à la fois en élévation et en azimut.

Dans des modes particuliers de réalisation, au moins une caméra panoramique présente un champ de vision en azimut de largeur angulaire 360 degrés autour d'un axe de la caméra panoramique. Un champ de vision aussi important permet avantageusement que la ou les caméras panoramiques du système de surveillance puissent observer de très larges zones d'intérêts associées notamment aux portes d'accès.

Dans des modes particuliers de réalisation, au moins une caméra panoramique est une caméra sensible dans des longueurs d'onde infrarouge. Une caméra panoramique de ce type permet avantageusement de réaliser des traitements d'images, notamment pour la détection de feu ou de fumée, et ainsi protéger les passagers ou leurs bagages, ou encore certains éléments de l'aéronef. La caméra panoramique peut également agir comme un détecteur thermographique, détectant un point chaud par incrustation graphique sur le flux d'images visualisé, et ainsi détecter la présence de fumée ou de personnes.

Dans des modes particuliers de réalisation, au moins une caméra panoramique est de préférence équipée d'un élément d'éclairage. Les traitements d'images qui peuvent être relevées par le système de surveillance peuvent mettre en oeuvre des traitements en dehors du spectre du visible, par exemple en infrarouge. Dans ces longueurs d'ondes, il est particulièrement avantageux d'associer un élément d'éclairage à une ou plusieurs caméras panoramiques, afin d'améliorer le traitement.

Dans des modes particuliers de réalisation, au moins une caméra panoramique est logée à l'intérieur d'un boîtier étanche, qui évite certaines dégradations de la caméra panoramique qui pourraient être dues à de la condensation susceptible de se former sur elle en l'absence d'un tel boîtier.

Dans des modes particuliers de réalisation, au moins une caméra panoramique présente une faible distorsion, permettant d'obtenir une vision proche de la vision humaine tout en ayant un champ de vision panoramique. Ainsi, l'interprétation des images par l'équipe de pilotage sera plus aisée.

### PRÉSENTATION DES FIGURES

L'invention sera mieux comprise à la lecture de la description qui suit et à l'examen des figures qui l'accompagnent. Ces figures sont données à titre illustratif mais nullement limitatif de l'invention. Elles montrent :
- Figure 1 : une représentation schématique d'un aéronef du type avion selon un mode de réalisation préféré de l'invention ;
- Figure 2 : une représentation schématique d'un aéronef du type selon un deuxième mode de réalisation préféré de l'invention.

Les éléments identiques, similaires ou analogues, conservent les mêmes références d'une Figure à l'autre.

### DESCRIPTION DÉTAILLÉE DE MODES DE RÉALISATION

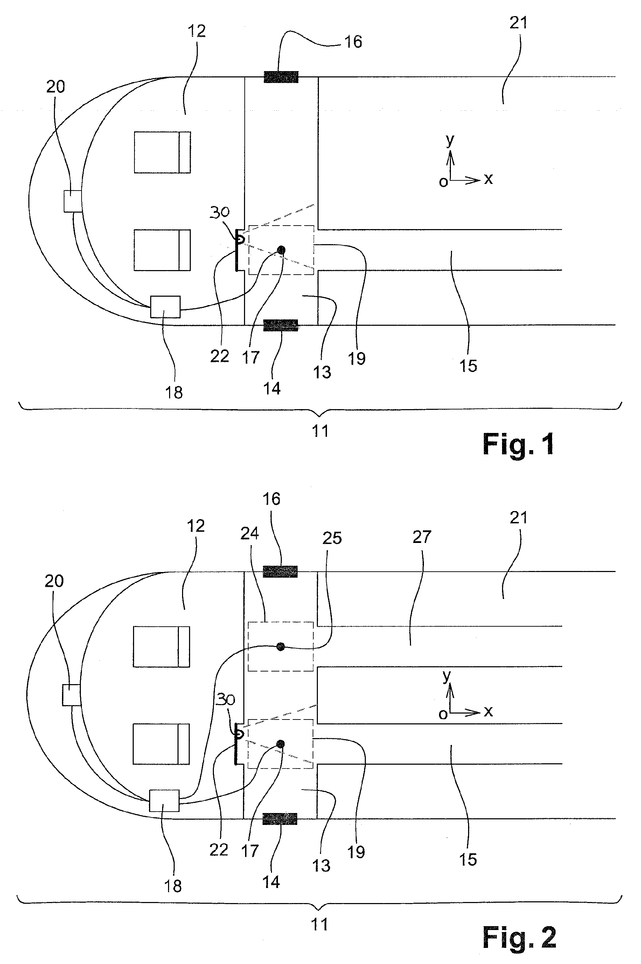

La Figure 1 illustre un mode préféré de réalisation de l'invention, et représente la partie avant d'un aéronef 11, dont les autres parties ne sont pas représentées. L'aéronef comporte un habitacle principal 21, destiné notamment à l'accueil des passagers, et une cabine de pilotage 12, séparée de l'habitacle principal par une porte d'accès 22.

Pour les besoins de la description, on associe un repère à l'aéronef 11, comportant trois axes x, y, z. L'axe x est un axe longitudinal de l'aéronef 11. L'axe y est un axe orthogonal à l'axe x, formant avec l'axe x un plan sensiblement parallèle à un plancher de l'aéronef 11. L'axe z (non représenté sur les figures) est orthogonal à l'axe x et à l'axe y, et est par conséquent sensiblement orthogonal au plancher de l'aéronef 11.

Une porte d'accès latérale 14 permet de pénétrer dans l'habitacle 21 de l'aéronef 11 depuis l'extérieur. Elle débouche sur une allée transversale 13, s'étendant sensiblement suivant l'axe y, jouxtant la cabine de pilotage 12.

Dans ce mode de réalisation, l'allée transversale 13 dessert, d'un côté, une allée longitudinale 15, s'étendant sensiblement suivant l'axe longitudinal x, et, de l'autre côté, la porte 22 d'accès à la cabine de pilotage 12. Une troisième porte 16 servant d'issue de secours est également présente à une extrémité de l'allée transversale 13 opposée à la porte d'accès latérale 14.

Pour protéger l'accès à la cabine de pilotage 12, la porte d'accès 22 est généralement sécurisée, par exemple blindée.

L'aéronef 11 comporte en outre un système de surveillance.

Ce système de surveillance comporte une caméra présentant un champ de vision panoramique, dite « caméra panoramique » 17.

On entend par « caméra panoramique », une caméra possédant un champ de vision avec une largeur angulaire supérieure à 150 degrés, de préférence supérieure à 240 degrés.

La caméra panoramique 17 est mise en oeuvre pour observer une zone d'intérêt associée à la porte 22 d'accès à la cabine de pilotage 12 et une zone d'intérêt associée à la porte d'accès latérale 14.

La caméra panoramique 17 est par exemple reliée à un calculateur 18 apte à traiter un flux d'images provenant de la caméra pour l'afficher sur au moins un écran de visualisation 20. Rien n'exclut, suivant d'autres exemples et dans le cas où le flux d'images ne doit pas être traité, de relier directement la caméra panoramique 17 à l'écran de visualisation 20, sans passer par un calculateur 18.

Dans les exemples donnés sur les Figures 1 et 2, l'écran de visualisation 20 se trouve dans la cabine de pilotage 12. Rien n'exclut, suivant d'autres exemples, d'avoir l'écran de visualisation 20 situé ailleurs dans l'aéronef 11 que dans la cabine de pilotage. En outre, si le système de surveillance comporte plusieurs écrans de visualisation, ceux-ci peuvent être situés dans des endroits différents de l'aéronef 11.

La caméra panoramique 17 peut être une caméra mobile en rotation autour d'un axe fixe, ou encore comporter une caméra fixe (immobile) associée à un système de miroir mobile en rotation. Dans de tels cas, l'observation du champ de vision panoramique se fait par déplacement de la caméra mobile et/ou du système de miroir mobile et par l'acquisition d'images successives représentant chacune une partie du champ de vision panoramique.

Préférentiellement, la caméra panoramique comporte une caméra fixe associée à un objectif fixe permettant de focaliser simultanément la totalité du champ de vision panoramique, comportant des éléments optiques diffractifs, réfractifs, à miroirs concaves et/ou convexes, à miroirs semi-réfléchissants, etc. Dans de tels cas, il est possible d'acquérir simultanément la totalité du champ de vision panoramique de la caméra panoramique 17, et chaque image acquise représente la totalité du champ de vision panoramique. A titre d'exemple, il peut être mis en oeuvre dans le cadre de la présente invention une caméra telle que décrite dans la demande de brevet FR-A-2 902 592. Ainsi, tous les éléments formant la caméra panoramique 17 sont préférentiellement non mobiles, et ladite caméra panoramique 17 n'a pas à comporter de moyens mécaniques et électriques d'entrainement de la caméra ou de son objectif, moyens d'entrainement qui sont souvent volumineux et nécessitent des opérations de maintenance régulières.

Dans l'exemple non limitatif de la Figure 1, la zone d'intérêt associée à une porte d'accès 14, 22, correspond à ladite porte d'accès, ainsi qu'à une zone située dans l'habitacle devant et autour de cette porte.

Selon l'invention, la caméra panoramique 17 est positionnée dans l'habitacle 21 de sorte que les zones d'intérêts associées à chacune des portes d'accès 14 et 22 se trouvent dans son champ de vision.

Dans le mode de réalisation représenté sur la Figure 1, la caméra panoramique 17 présente de préférence un champ de vision panoramique autour d'un axe de la caméra, dit « axe caméra », sensiblement parallèle à l'axe z (l'axe z étant orthogonal aux axes x et y). En d'autres termes, le champ de vision de la caméra panoramique 17 est de largeur angulaire supérieure à 150 degrés autour de l'axe caméra (en azimut). De préférence, la largeur du champ de vision de la caméra panoramique 17 autour de cet axe est sensiblement égale à 360 degrés.

La caméra panoramique 17 peut avantageusement être placée au plafond, qui est en général peu encombré. En cela, la présente invention s'avère bien plus avantageuse que les dispositifs proposés par l'art antérieur, qui requièrent une installation dans des endroits plus encombrés tels que les cloisons au-dessus des portes d'accès.

De préférence, la caméra panoramique 17 permet d'obtenir un champ de vision panoramique non seulement autour de l'axe caméra (en azimut), mais également par rapport à l'axe caméra dans un plan contenant ledit axe caméra (en élévation). En effet, une telle caméra panoramique permet d'observer dans de nombreuses directions en azimut et en élévation. Par exemple, si une caméra panoramique 17 présente un champ de vision panoramique de largeur angulaire sensiblement 360 degrés en azimut, et sensiblement 180 degrés en élévation, une telle caméra panoramique permettra d'observer un angle solide d'environ 2π stéradians, soit un champ de vision sensiblement semi-sphérique. L'exemple de caméra panoramique donné dans la demande de brevet FR-A-2 902 592 permet d'avoir un champ de vision de largeur angulaire sensiblement 360 degrés en azimut, et près de 150 degrés en élévation.

De préférence, la caméra panoramique 17 est située au niveau d'une zone de croisement 19 de l'allée transversale 13 et de l'allée longitudinale 15, tel que représenté sur la Figure 1.

En outre, si le champ de vision de la caméra panoramique 17 est suffisamment large (c'est le cas si la largeur du champ de vision est égale à 360 degrés en azimut), une telle position de la caméra panoramique 17 lui permet d'observer également une zone d'intérêt associée à l'issue de secours 16 de l'aéronef 11.

Dans le cas d'une caméra panoramique 17 présentant un champ de vision panoramique également en élévation (telle que la caméra décrite dans la demande de brevet FR-A-2 902 592), une telle position de la caméra panoramique 17, dans le plafond au niveau de la zone de croisement 19 et dirigée vers un plancher de ladite zone de croisement, lui permet d'observer également ladite zone de croisement.

Ce système selon l'invention permet de réduire grandement les besoins en caméras des systèmes de surveillance. Cet objectif est atteint non seulement au moyen d'une seule caméra panoramique 17, mais également en modifiant complètement l'agencement conventionnel des caméras des systèmes de surveillance actuels. Cela réduit donc directement le nombre de caméras et le nombre de connecteurs nécessaires à leur mise en oeuvre, ainsi que les besoins en câblage. De plus, lorsqu'une caméra panoramique présente un champ de vision et une position tels que préconisés par l'invention, le système de surveillance présente peu ou pas d'angles morts : il permet d'acquérir simultanément des images de l'ensemble des zones situées à proximité des portes d'accès visées.

De plus, l'intégralité du champ de vision de la caméra panoramique 17 peut avantageusement être présentée à l'équipe de pilotage (et/ou au personnel navigant commercial) sous la forme d'une seule image. De la sorte, l'équipe de pilotage a accès instantanément à des informations relatives à plusieurs zones d'intérêt associées à différentes portes d'accès de l'aéronef 11, là où, selon l'art antérieur, elle devait examiner successivement les images fournies par chacune des caméras.

Dans un mode particulier de réalisation, également illustré par la Figure 1, le système de surveillance comporte une caméra présentant un champ de vision non panoramique (c'est-à-dire de largeur angulaire égale ou inférieure à 150 degrés), dite « caméra non panoramique » 30.

La caméra non panoramique 30 est positionnée de sorte à observer une zone d'intérêt se trouvant dans le champ de vision de la caméra panoramique 17. Plus particulièrement, la caméra non panoramique 30 est positionnée de sorte à observer une zone d'intérêt se trouvant devant la porte 22 d'accès à la cabine de pilotage 12. A cet effet, la caméra non panoramique 30 est dans cet exemple positionnée dans la porte 22 d'accès à la cabine de pilotage 12 de sorte à observer l'allée longitudinale 15.

La caméra non panoramique 30 est par exemple mise en oeuvre pour effectuer l'identification d'une personne se présentant devant la porte 22 et cherchant à accéder à la cabine de pilotage 12. Ainsi, la caméra panoramique 17 permet de surveiller l'accès à la porte 22 de la cabine de pilotage 12, et de détecter si une personne cherche à entrer dans ladite cabine de pilotage 12. Cette détection est par exemple effectuée par l'équipe de pilotage ou automatiquement par traitement des images fournies par la caméra panoramique 17. La caméra non panoramique 30, qui peut n'être activée que lorsqu'il a été détecté qu'une personne cherche à entrer dans la cabine de pilotage 12, permet alors d'observer le visage de cette personne et d'en faciliter la reconnaissance par l'équipe de pilotage ou automatiquement par traitement des images fournies par ladite caméra non panoramique 30.

Rien n'exclut, suivant d'autres exemples, de remplacer la caméra non panoramique 30 par une autre caméra panoramique, dès lors que la position de celle-ci permet d'observer une partie du champ de vision de la caméra panoramique 17 avec un point de vue différent de celui de ladite caméra panoramique 17.

La Figure 2 représente un autre mode préféré de réalisation, dans le cas d'un aéronef 11 du type avion de topologie différente de celui de la Figure 1. Cet aéronef comporte les mêmes éléments constitutifs que celui décrit ci-avant en référence à la Figure 1, en y ajoutant une seconde allée longitudinale 27 dans l'habitacle 21 de l'aéronef 11. La seconde allée longitudinale 27 croise l'allée transversale 13 dans une seconde zone de croisement 24.

Dans l'exemple de réalisation illustré par la Figure 2, le système de surveillance comporte une seconde caméra panoramique 25, située de préférence au niveau de cette seconde zone de croisement 24 et dans une position lui permettant d'acquérir une image au moins de la seconde allée longitudinale 27.

Dans le cas où la seconde caméra panoramique 25 présente un champ de vision panoramique à la fois autour d'un axe sensiblement parallèle à l'axe z (en azimut) et dans un plan sensiblement parallèle à l'axe z, de part et d'autre de cet axe (en élévation), ladite seconde caméra panoramique peut être agencée de sorte à acquérir une image représentant également au moins partiellement :
- la zone d'intérêt associée à la porte 14 d'accès à l'habitacle 21 de l'aéronef 11,
- la zone d'intérêt associée à l'issue de secours 16 de l'aéronef 11,
- la seconde zone de croisement 24.

L'utilisation d'une seconde caméra panoramique 25 disposée dans la seconde zone de croisement 24 permet ainsi une redondance des contrôles de l'allée transversale 13, de la porte 14 d'accès à l'habitacle 21 de l'aéronef 11, et de l'issue de secours 16 de l'aéronef 11. Cette redondance des informations entre les deux caméras panoramiques du mode de réalisation de l'invention objet de la Figure 2, permet avantageusement de visualiser les personnes voulant accéder à la cabine de pilotage 12 sous plusieurs angles de vue, et ainsi de mieux les identifier.

Dans un mode particulier de réalisation, le système de surveillance comporte une caméra panoramique située dans une soute de l'aéronef 11, qui n'est pas représentée sur les figures, de préférence du type comportant une caméra fixe associée à un objectif fixe permettant de focaliser la totalité du champ de vision panoramique.

L'utilisation d'une caméra panoramique dans la soute de l'aéronef 11 permet de surveiller, au moyen d'un nombre réduit de caméras, plusieurs zones d'intérêt, dont l'une est par exemple associée à une porte d'accès à la soute. Comme décrit précédemment, l'implantation d'une caméra panoramique dans la soute permet de réduire les besoins en caméras, et donc également les besoins en connectique et en maintenance.

De préférence, la caméra panoramique dans la soute est logée dans un plafond de cette soute. Avantageusement, la caméra panoramique est placée sensiblement au milieu du plafond de ladite soute. Une telle position de la caméra panoramique permet, lorsqu'elle présente un champ de vision de largeur angulaire 360 degrés, d'observer toutes les parois de la soute au moyen d'une seule caméra.

Dans un mode particulier de réalisation, le système de surveillance comporte une caméra panoramique située dans un logement de train d'atterrissage de l'aéronef 11, qui n'est pas représentée sur les figures, de préférence du type comportant une caméra fixe associée à un objectif fixe permettant de focaliser la totalité du champ de vision panoramique.

Dans un mode particulier de réalisation, le système de surveillance comporte une caméra panoramique située dans une cabine passagers de l'aéronef 11, qui n'est pas représentée sur les figures, de préférence du type comportant une caméra fixe associée à un objectif fixe permettant de focaliser la totalité du champ de vision panoramique.

Le système de surveillance comporte par exemple au moins une caméra panoramique sensible dans une bande de longueurs d'ondes visibles (c'est-à-dire comprises entre 0.4 micromètres et 0.7 micromètres) et/ou dans une bande de longueurs d'ondes infrarouges (c'est-à-dire comprises entre 0.7 micromètres à 100 micromètres). Dans le cas d'une caméra panoramique sensible dans une bande de longueurs d'ondes infrarouge, ladite caméra panoramique est de préférence sensible dans une des bandes de longueurs d'ondes suivantes :
- 0.7 à 3 micromètres (bande I),
- 3 à 5 micromètres (bande II),
- 8 à 14 micromètres (bande III).

Dans le cas où le système de surveillance comporte plusieurs caméras panoramiques, celles-ci sont sensibles dans une même bande de longueurs d'ondes, ou dans des bandes de longueurs d'ondes différentes.

Avantageusement, un élément d'éclairage peut être associé à une ou plusieurs des caméras panoramiques. Par exemple, dans le cas de la soute de l'aéronef 11, l'utilisation d'une caméra panoramique thermique associée à un élément d'éclairage infrarouge, permet d'avoir une meilleure visibilité notamment en cas de présence de fumée dans la soute.

On comprend que l'utilisation d'une caméra panoramique dans un système de surveillance d'une enceinte d'un aéronef présente de nombreux avantages. Il est à noter que de nombreuses positions sont possibles pour l'installation d'une caméra panoramique dans une enceinte d'un aéronef, et que l'invention ne saurait être limitée aux positions décrites notamment en référence aux Figures 1 et 2, qui illustrent cependant des modes de réalisation considérés comme particulièrement avantageux.

De manière plus générale, un système de surveillance selon l'invention comporte au moins une caméra panoramique qui peut être positionnée dans n'importe quelle enceinte de l'aéronef (cabine de pilotage, habitacle passagers, soute, logement de train d'atterrissage, cabine passagers, etc.) de sorte à permettre l'observation d'au moins une zone d'intérêt dans cette enceinte. Dans le cas où le système de surveillance comporte plusieurs caméras panoramiques, celles-ci peuvent être toutes positionnées dans une même enceinte de l'aéronef, à des endroits différents de cette enceinte, ou réparties dans différentes enceintes de l'aéronef.

## Revendications

1. Aéronef (11) comportant un habitacle (21), ledit habitacle comportant une allée transversale (13) et une allée longitudinale (15) se croisant en une zone de croisement (19), une première porte d'accès (14) étant située à une extrémité de l'allée transversale (13) et une deuxième porte d'accès (22) étant située à une extrémité de l'allée longitudinale (15), ladite première porte d'accès permettant d'accéder de l'extérieur de l'aéronef (11) à l'habitacle (21) et ladite seconde porte d'accès permettant d'accéder de l'habitacle (21) à une cabine de pilotage (12) de l'aéronef (11), **caractérisé en ce que** ledit aéronef comporte un système de surveillance CDSS "Cockpit Door Surveillance System" de la seconde porte d'accès, et **en ce que** ledit système de surveillance CDSS comporte une caméra présentant un champ de vision panoramique, dite « caméra panoramique » (17), ladite caméra panoramique étant logée dans un plafond de l'habitacle (21) et étant positionnée au niveau de la zone de croisement (19) de sorte qu'une zone d'intérêt associée à la première porte d'accès (14) et une zone d'intérêt associée à la deuxième porte d'accès se trouvent dans le champ de vision de la caméra panoramique.

2. Aéronef (11) selon la revendication 1, **caractérisé en ce qu'**il comporte une caméra présentant un champ de vision non panoramique, dite « caméra non panoramique » (30), positionnée de sorte à observer une zone d'intérêt se trouvant dans le champ de vision de la caméra panoramique.

3. Aéronef (11) selon la revendication 2, **caractérisé en ce que** la caméra non panoramique (30) est positionnée de sorte à observer une zone d'intérêt se trouvant à l'extrémité de l'allée longitudinale (15), devant la seconde porte d'accès (22).

4. Aéronef (11) selon la revendication 3, **caractérisé en ce que** la caméra non panoramique (30) est positionnée dans la seconde porte d'accès (22) ou dans une cloison entourant ladite seconde porte d'accès (22).

5. Aéronef (11) selon l'une des revendications précédentes, **caractérisé en ce que** la caméra panoramique (17) présente un champ de vision suffisamment large pour observer également l'allée transversale (13) du côté opposé à la première porte d'accès (14), et/ou l'allée longitudinale (15) du côté opposé à la deuxième porte d'accès (22).

6. Aéronef (11) selon l'une des revendications précédentes, **caractérisé en ce qu'**il comporte une troisième porte (16) d'accès à une autre extrémité de l'allée transversale (13), et **en ce que** la caméra panoramique (17) présente un champ de vision suffisamment large pour observer également la troisième porte d'accès (16).

7. Aéronef (11) selon l'une des revendications précédentes, **caractérisé en ce qu'**il comporte une seconde allée longitudinale (27) se croisant avec l'allée transversale (13) en une seconde zone de croisement (24), et **en ce que** le système de surveillance comporte une autre caméra panoramique (25) positionnée au niveau de la seconde zone de croisement (24) de sorte à observer au moins la seconde allée longitudinale (27).

8. Aéronef (11) selon l'une des revendications précédentes, **caractérisé en ce qu'**il comporte une autre caméra panoramique, positionnée dans une soute de l'aéronef (11) ou dans un logement d'un train d'atterrissage de l'aéronef (11).

9. Aéronef (11) selon l'une des revendications précédentes, **caractérisé en ce qu'**il comporte une autre caméra panoramique, positionnée dans une cabine passagers de l'aéronef (11).

10. Aéronef (11) selon l'une des revendications précédentes, **caractérisé en ce qu'**au moins une caméra panoramique comporte une caméra fixe associée à un objectif apte à focaliser le champ de vision panoramique.

11. Aéronef (11) selon l'une des revendications précédentes, **caractérisé en ce qu'**au moins une caméra panoramique présente un champ de vision qui est panoramique à la fois en azimut, autour d'un axe de la caméra, et en élévation dans un plan contenant ledit axe de la caméra.

12. Aéronef (11) selon l'une des revendications précédentes, **caractérisé en ce qu'**au moins une caméra panoramique présente un champ de vision en azimut de largeur angulaire 360 degrés.

13. Aéronef (11) selon l'une des revendications précédentes, **caractérisé en ce qu'**au moins une caméra panoramique est une caméra sensible dans des longueurs d'ondes infrarouge.

14. Aéronef (11) selon l'une des revendications précédentes, **caractérisé en ce qu'**au moins une caméra panoramique est équipée d'un élément d'éclairage.

## Patentansprüche

1. Flugzeug (11), umfassend einen Innenraum (21), wobei der Innenraum eine Quergang (13) und einen Längsgang (15) umfasst, die sich in einer Kreuzungszone (19) kreuzen, wobei eine erste Zugangstür (14) an einem Ende des Quergangs (13) und eine zweite Zugangstür (22) an einem Ende des Längsgangs (15) angeordnet ist, wobei es die erste Zugangstür ermöglicht, von außerhalb des Flugzeugs (11) zum Innenraum (21) Zugang zu erhalten, und wobei es die zweite Zugangstür ermöglicht, vom Innenraum (21) zu einer Steuerkabine (12) des Flugzeugs (11) Zugang zu erhalten, **dadurch gekennzeichnet, dass** das Flugzeug ein Überwachungssystem CDSS "Cockpit Door Surveillance System" der zweiten Zugangstür umfasst, und dass das Überwachungssystem CDSS eine Kamera umfasst, die ein Panoramasichtfeld aufweist, "Panoramakamera" (17) genannt, wobei die Panoramakamera in einer Decke des Innenraums (21) angeordnet und im Bereich der Kreuzungszone (19) positioniert ist, so dass sich eine der ersten Zugangstür (14) zugeordnete Zone von Interesse und eine der zweiten Zugangstür zugeordnete Zone von Interesse in dem Sichtfeld der Panoramakamera befinden.

2. Flugzeug (11) nach Anspruch 1, **dadurch gekennzeichnet, dass** es eine Kamera umfasst, die ein nicht panoramaartiges Sichtfeld aufweist, "Nicht-Panoramakamera" (30) genannt, die derart positioniert ist, dass die eine Zone von Interesse beobachtet, die sich in dem Sichtfeld der Panoramakamera befindet.

3. Flugzeug (11) nach Anspruch 2, **dadurch gekennzeichnet, dass** die Nicht-Panoramakamera (30) derart positioniert ist, dass sie eine Zone von Interesse beobachtet, die sich am Ende des Längsgangs (15) vor der zweiten Zugangstür (22) befindet.

4. Flugzeug (11) nach Anspruch 3, **dadurch gekennzeichnet, dass** die Nicht-Panoramakamera (30) in der zweiten Zugangstür (22) oder in einer Trennwand, die die zweite Zugangstür (22) umgibt, angeordnet ist.

5. Flugzeug (11) nach einem der vorhergehenden Ansprüche, **dadurch gekennzeichnet, dass** die Panoramakamera (17) ein ausreichend weites Sichtfeld aufweist, um auch den Quergang (13) auf der der ersten Zugangstür (14) gegenüberliegenden Seite und/oder den Längsgang (15) auf der der zweiten Zugangstür (22) gegenüberliegenden Seite zu beobachten.

6. Flugzeug (11) nach einem der vorhergehenden Ansprüche, **dadurch gekennzeichnet, dass** es eine dritte Zugangstür (16) zu einem anderen Ende des Quergangs (13) umfasst, und dass die Panoramakamera (17) ein ausreichend weites Sichtfeld aufweist, um auch die dritte Zugangstür (16) zu beobachten.

7. Flugzeug (11) nach einem der vorhergehenden Ansprüche, **dadurch gekennzeichnet, dass** es einen zweiten Längsgang (27) umfasst, der sich mit dem Quergang (13) in einer zweiten Kreuzungszone (24) kreuzt, und dass das Überwachungssystem eine weitere Panoramakamera (25) umfasst, die im Bereich der zweiten Kreuzungszone (24) positioniert ist, um mindestens den zweiten Längsgang (27) zu beobachten.

8. Flugzeug (11) nach einem der vorhergehenden Ansprüche, **dadurch gekennzeichnet, dass** es eine weitere Panoramakamera umfasst, die in einem Frachtraum des Flugzeugs (11) oder in einer Lagerung eines Fahrwerks des Flugzeugs (11) positioniert ist.

9. Flugzeug (11) nach einem der vorhergehenden Ansprüche, **dadurch gekennzeichnet, dass** es eine weitere Panoramakamera umfasst, die in einer Passagierkabine des Flugzeugs (11) positioniert ist.

10. Flugzeug (11) nach einem der vorhergehenden Ansprüche, **dadurch gekennzeichnet, dass** mindestens eine Panoramakamera eine feste Kamera umfasst, die mit einem Objektiv verbunden ist, das geeignet ist, das Panoramasichtfeld zu fokussieren.

11. Flugzeug (11) nach einem der vorhergehenden Ansprüche, **dadurch gekennzeichnet, dass** mindestens eine Panoramakamera ein Sichtfeld aufweist, das sowohl in Azimut um eine Achse der Kamera als auch in Elevation in einer Ebene, die die Achse der Kamera enthält, panoramaartig ist.

12. Flugzeug (11) nach einem der vorhergehenden Ansprüche, **dadurch gekennzeichnet, dass** mindestens eine Panoramakamera ein Sichtfeld in Azimut mit einer Winkelweite von 360 Grad aufweist.

13. Flugzeug (11) nach einem der vorhergehenden Ansprüche, **dadurch gekennzeichnet, dass** mindestens eine Panoramakamera eine in Infrarotwellenlängen sensible Kamera ist.

14. Flugzeug (11) nach einem der vorhergehenden Ansprüche, **dadurch gekennzeichnet, dass** mindestens eine Panoramakamera mit einem Beleuchtungselement ausgestattet ist.

## Claims

1. An aircraft (11) comprising a cabin (21), said cabin comprising a transverse aisle (13) and a longitudinal aisle (15) that intersect at an intersection zone (19), a first access door (14) being situated at one end of the transverse aisle (13) and a second access door (22) being situated at one end of the longitudinal aisle (15), said first access door providing access to the cabin (21) from the outside of the aircraft (11) and said second access door providing access from the cabin (21) to a cockpit (12) of the aircraft (11), **characterized in that** said aircraft comprises a "Cockpit Door Surveillance System" CDSS surveillance system for the second access door, and **in that** said CDSS surveillance system comprises a camera that has a panoramic field of view, referred to as a "panoramic camera" (17), said panoramic camera being housed in a ceiling of the cabin (21) and being sited in the region of the intersection zone (19) so that a zone of interest associated with the first access door (14) and the zone of interest associated with the second access door are in the field of view of the panoramic camera.

2. The aircraft (11) as claimed in claim 1, **characterized in that** it comprises a camera having a non-panoramic field of view, referred to as a "non-panoramic camera" (30), sited in such a way as to observe a zone of interest situated in the field of view of the panoramic camera.

3. The aircraft (11) as claimed in claim 2, **characterized in that** the non-panoramic camera (30) is sited in such a way as to observe a zone of interest situated at the end of the longitudinal aisle (15), in front of the second access door (22).

4. The aircraft (11) as claimed in claim 3, **characterized in that** the non-panoramic camera (30) is sited in the second access door (22) or in a bulkhead surrounding said second access door (22).

5. The aircraft (11) as claimed in one of the preceding claims, **characterized in that** the panoramic camera (17) has a field of view wide enough to observe also the transverse aisle (13) on the opposite side to the first access door (14) and/or the longitudinal aisle (15) on the opposite side to the second access door (22).

6. The aircraft (11) as claimed in one of the preceding claims, **characterized in that** it comprises a third access door (16) at another end of the transverse aisle (13), and **in that** the panoramic camera (17) has a field of view that is wide enough also to observe the third access door (16).

7. The aircraft (11) as claimed in one of the preceding claims, **characterized in that** it comprises a second longitudinal aisle (27) intersecting with the transverse aisle (13) at a second intersection zone (24), and **in that** the surveillance system comprises another panoramic camera (25) sited in the region of the second intersection zone (24) so as to observe at least the second longitudinal aisle (27).

8. The aircraft (11) as claimed in one of the preceding claims, **characterized in that** it comprises another panoramic camera, sited in a hold of the aircraft (11) or in a landing gear bay of the aircraft (11).

9. The aircraft (11) as claimed in one of the preceding claims, **characterized in that** it comprises another panoramic camera, sited in a passenger cabin of the aircraft (11).

10. The aircraft (11) as claimed in one of the preceding claims, **characterized in that** at least one panoramic camera comprises a fixed camera associated with an objective lens capable of focusing the panoramic field of view.

11. The aircraft (11) as claimed in one of the preceding claims, **characterized in that** at least one panoramic camera has a field of view that is panoramic both in azimuth, about an axis of the camera, and in elevation in a plane containing said axis of the camera.

12. The aircraft (11) as claimed in one of the preceding claims, **characterized in that** at least one panoramic camera has a field of view in azimuth that has an angular width of 360°.

13. The aircraft (11) as claimed in one of the preceding claims, **characterized in that** at least one panoramic camera is a camera that is sensitive in the infrared wavelengths.

14. The aircraft (11) as claimed in one of the preceding claims, **characterized in that** at least one panoramic camera is equipped with a lighting element.
